# EUROPEAN PATENT SPECIFICATION

(11) **EP 3 211 931 B1**
(45) Date of publication and mention of the grant of the patent: **04.09.2019**
(21) Application number: 15853354.7
(22) Date of filing: 12.03.2015
(51) Int. Cl.: H04W 76/14, H04W 12/04, H04W 76/30, H04W 8/18, H04L 29/06

(54) **METHOD FOR MANAGING DEVICE-TO-DEVICE (D2D) COMMUNICATION GROUP, DEVICE, AND STORAGE MEDIUM**
VERFAHREN ZUR VERWALTUNG EINER D2D-KOMMUNIKATIONSGRUPPE, VORRICHTUNG UND SPEICHERMEDIUM
PROCÉDÉ DE GESTION DE GROUPE DE COMMUNICATION DE DISPOSITIF À DISPOSITIF (D2D), DISPOSITIF ET SUPPORT DE STOCKAGE

(30) Priority: 23.10.2014 CN 201410571609
(43) Date of publication of application: 30.08.2017
(73) Proprietor: ZTE Corporation, Shenzhen, Guangdong 518057 (CN)
(72) Inventor: YU, Wantao, Shenzhen Guangdong 518057 (CN)
(74) Representative: Lavoix
(86) International application number: PCT/CN2015/074124
(87) International publication number: WO 2016/061979

(56) References cited:
- EP-A1- 2 765 793
- WO-A1-2014/033199
- WO-A1-2014/037277
- WO-A1-2014/165747
- CN-A- 1 671 097
- CN-A- 101 841 413
- CN-A- 103 765 842
- US-A1- 2013 196 631
- US-A1- 2014 002 474

## Description

### TECHNICAL FIELD

The disclosure relates to the field of Device to Device (D2D) communication, and in particular to a method for managing a D2D communication group, and a device.

### BACKGROUND

In the current Long Term Evolution (LTE) network and LTE-Advanced (LTE-A) network, D2D communication is that a mobile device directly performs Peer to Peer (P2P) communication by sharing/reusing a wireless link (an up link or a down link) of a wireless communication network. In the current infrastructure-based cellular mobile communication network, a base station, as a central control node, is the only access point for the mobile device to obtain network services. All mobile devices can communicate with a certain particular base station in the network only through an uplink or downlink channel in a cellular system.

At present, during the D2D communication, a D2D group sets a Group Owner (GO) to manage devices in the D2D group, and a shared key of the D2D group is managed by a D2D functional entity at a network side, that is, the management of the D2D group and the management of the shared key are two independent processes, then a situation where the two processes are out of sync may appear; for example, after a new device joins in the D2D group, in order to ensure the communication security of the D2D group, the D2D functional entity at the network side will not issue the shared key to the new device, so the new device cannot communicate with the other devices in the group even it joins in the D2D group; if the D2D functional entity at the network side issues the shared key to the new device separately, there may be a risk of divulging the key caused by issuing the key separately.

Thus, in the prior art, there is not a method for managing a D2D communication group that can give consideration to both reliability of D2D communication and dynamic change of devices in the D2D group.

US2013/196631 A1 discloses a method, an apparatus, and a computer program product for wireless communication. The apparatus may be an initiator UE, a target UE, an MME of an initiator UE, or an MME of a target UE. In one configuration, the apparatus is a target UE. The target UE broadcasts information for identifying an MME serving the target UE along with a target expression of the target UE, receives, from the MME serving the target UE, parameters and a key for communicating with an initiator UE, and communicates securely with the initiator UE based on the key.

WO2014/165747 A1 discloses systems, methods and apparatus embodiments for leveraging security associations to enhance security of proximity services. Existing security associations are leveraged to create security associations that are used by proximity services. For example, existing keys may be leveraged to derive new keys that may be used to secure peer-to-peer communications.

WO2014/037277 A1 discloses a method for establishing a device-to-device communication session between mobile devices which are mutually connectable via a D2D communication channel (DDC) and individually connectable to a mobile network, comprising: - preloading an initiation key on each of the mobile devices, the initiation key being associated with a validity period; and on each of the mobile devices: - verifying a validity of the initiation key based on a current time; - if the initiation key is deemed valid, generating a session key using the initiation key by using the initiation key in performing a key agreement procedure between the mobile devices over the D2D communication channel (DDC), the key agreement procedure resulting in the session key if the initiation key used by each of the mobile devices matches; and - establishing the D2D communication session over the D2D communication channel (DDC) based on the session key.

WO2014/033199 A1 discloses a method and devices for pairing within a group of wireless devices. System for wireless communication comprises a group of wireless devices that include at least one wireless host device securely connected based on first secret data shared by the group. A second secure connection is set-up between a portable wireless device and a wireless host device based on second secret data. At least one of the wireless devices is instructed to apply a third secret data for setting up a direct wireless secure connection with the portable wireless device. Also the portable wireless device is instructed via the second secure connection to apply the third secret data for setting up the direct secure connections with the wireless devices based on the third secret data. Finally a respective direct wireless secure connection is set-up between the second device and a respective wireless device based on the third secret data. Advantageously latency is reduced in a secure wireless docking system.

### SUMMARY

The invention is set out in the appended set of claims.

In view of the above, embodiments of the disclosure are intended to provide a method for managing a D2D communication group, a device and a storage medium, so as to give consideration to both reliability of D2D communication and dynamic change of devices in the D2D group.

The technical solutions of the disclosure are implemented as follows.

In a first aspect, the disclosure provides a method for managing a D2D communication group, which includes: upon reception of a group establishing request send by a first device, a network-side device establishes a D2D communication group, and issues a shared key generated for the D2D communication group to all devices in the D2D communication group, herein the group establishing request is used for the network-side device to establish the D2D communication group, and the shared key is used for D2D communication of all the devices; and upon reception of a communication ending message sent by the first device to the network-side device and a second device within the D2D communication group, the network-side device determines that the D2D communication of the D2D communication group ends, and deletes the D2D communication group and the shared key.

Based on the above solution, the step that the network-side device establishes the D2D communication group may include: the network-side device receives a group establishing request sent by a first device, herein the group establishing request carries first identity information of the first device and second identity information of the second device; and the network-side device establishes the D2D communication group based on the first identity information and the second identity information.

Based on the above solution, after the network-side device generates the shared key for the D2D communication group, and before the network-side device determines that the D2D communication of the D2D communication group ends, the method may further include: the network-side device sends group identity information of the D2D communication group and the shared key to all the devices in the D2D communication group; the step that the network-side device deletes the D2D communication group and the shared key may include: the network-side device deletes the group identity information and the shared key.

Based on the above solution, the step that the network-side device determines that the D2D communication of the D2D communication group ends may include: the network-side device receives a communication ending message from the first device, and confirms that the D2D communication of the D2D communication group ends.

In a second aspect, the disclose provides a method for managing a D2D communication group, which includes: the first device sends the group establishing request to the network-side device, herein the group establishing request is used for the network-side device to establish the D2D communication group; the first device receives the shared key from the network-side device, and performs the D2D communication with the second device in the D2D communication group based on the shared key; after the D2D communication ends, the first device sends a communication ending message to the network-side device and the second device which then deletes the shared key, and deletes the shared key.

Based on the above solution, the step that the first device sends the group establishing request to the network-side device may include: the first device generates the group establishing request carrying the first identity information of the first device and the second identity information of the second device; and the first device sends the group establishing request to the network-side device.

Based on the above solution, before the first device performs the D2D communication based on the shared key, the method may further include: the first device receives the group identity information sent by the network-side device; the step that the first device sends the communication ending message may include: the first device sends the communication ending message carrying the group identity information.

Based on the above solution, the step that the first device performs the D2D communication based on the shared key may include: the first device generates a session key based on the shared key; and the first device performs the D2D communication with the second device by using the session key.

In a third aspect, the disclosure provides a method for managing a D2D communication group, which includes: the second device receives the shared key for the D2D communication group sent by the network-side device; the second device performs the D2D communication with the first device in the D2D communication group based on the shared key; and the second device receives the communication ending message from the first device, and deletes the shared key.

Based on the above solution, the step that the second device performs the D2D communication with the first device in the D2D communication group based on the shared key may include: the second device generates the session key based on the shared key; and the second device performs the D2D communication with the first device by using the session key.

In a fourth aspect, the disclosure provides a network-side device, which includes: a group establishing unit, a key generating unit, a first sending unit and a group deleting unit; herein, the group establishing unit is arranged to upon reception of a group establishing request send by a first device, establish the D2D communication group, the group establishing request is used for the network-side device to establish the D2D communication group; the key generating unit is arranged to generate the shared key for the D2D communication group, herein the shared key is used for the D2D communication of all the devices in the D2D communication group; and the first sending unit is arranged to issue the shared key to all the devices; the group deleting unit is arranged to upon reception of a communication ending message sent by the first device to the network-side device and a second device within the D2D communication group, determine that the D2D communication of the D2D communication group ends, and delete the D2D communication group and the shared key.

Based on the above solution, the group establishing unit may include: a receiving subunit arranged to receive the group establishing request sent by the first device, herein the group establishing request carries the first identity information of the first device and the second identity information of the second device; and a group establishing subunit arranged to establish the D2D communication group based on the first identity information and the second identity information.

Based on the above solution, the first sending unit is further arranged to, after the group establishing unit generates the shared key for the D2D communication group, and before the deleting unit determines that the D2D communication of the D2D communication group ends, send the group identity information of the D2D communication group and the shared key to all the devices; the group deleting unit is further arranged to delete the group identity information and the shared key.

Based on the above solution, the group deleting unit is arranged to receive the communication ending message from the first device, and confirm that the D2D communication of the D2D communication group ends.

In a fifth aspect, the disclosure provides a device, which includes: a second sending unit, a first receiving unit, a first D2D communication unit and a first deleting unit; herein the second sending unit is arranged to send the group establishing request to the network-side device, herein the group establishing request is used for the network-side device to establish the D2D communication group; the second sending unit is further arranged to, after the D2D communication with the second device in the D2D communication group ends, send the communication ending message to the network-side device and the second device which then deletes a shared key from the network-side device; the first receiving unit is arranged to receive the shared key from the network-side device; the first D2D communication unit is arranged to perform the D2D communication based on the shared key; and the first deleting unit is arranged to delete the shared key.

Based on the above solution, the second sending unit includes a generating subunit arranged to generate the group establishing request carrying the first identity information of the first device and the second identity information of the second device; and a sending subunit arranged to send the group establishing request to the network-side device.

Based on the above solution, the first receiving unit is arranged to, before the first D2D communication unit performs the D2D communication based on the shared key, receive the group identity information sent by the network-side device; the second sending unit is arranged to send the communication ending message carrying the group identity information.

Based on the above solution, the first D2D communication unit is arranged to generate the session key based on the shared key, and perform the D2D communication with the second device by using the session key.

In a sixth aspect, the disclosure provides a device, which includes: a second receiving unit, a second D2D communication unit and a second deleting unit; herein, the second receiving unit is arranged to receive the shared key for the D2D communication group from the network-side device; the second D2D communication unit is arranged to perform the D2D communication with the first device in the D2D communication group based on the shared key, and receive the communication ending message from the first device; the second deleting unit is arranged to delete the shared key.

Based on the above solution, the second D2D communication unit is further arranged to generate the session key based on the shared key, and perform the D2D communication with the first device by using the session key.

In a seventh aspect, the disclosure provides a computer program comprising computer code means adapted to perform all the steps of the method according to claims 1 to 7 when said program is run on a computer.

According to the method and device for managing a D2D communication group and the storage medium provided by the embodiments of the disclosure, the network-side device establishes the D2D communication group, generates the shared key for the D2D communication group and issues the shared key to all the devices in the D2D communication group; then, after the D2D communication is completed, the network-side device deletes the D2D communication group and the shared key, so it is required to re-establish a group in the next communication. In this way, a group is established and a new key is issued when a communication is performed each time, so that when there is a new device joining the D2D group, the network-side device issues the shared key to all devices in a new group when establishing the new group, thereby it is possible to prevent the risk of divulging the key caused by issuing the key separately, ensure the security of the D2D communication, and give consideration to the dynamic change of the devices in the D2D group.

### BRIEF DESCRIPTION OF THE DRAWINGS

Fig. 1 is a system architecture diagram of a D2D communication system provided by an embodiment of the disclosure;
Fig. 2 is a flowchart of a method for a D2D communication system to manage a D2D communication group provided by an embodiment of the disclosure;
Fig. 3 is a flowchart of another method for a D2D communication system to manage a D2D communication group provided by an embodiment of the disclosure;
Fig. 4 is a flowchart of a method for a network-side device to manage a D2D communication group provided by an embodiment of the disclosure;
Fig. 5 is a flowchart of a method for a first device to manage a D2D communication group provided by an embodiment of the disclosure;
Fig. 6 is a flowchart of a method for a second device to manage a D2D communication group provided by an embodiment of the disclosure;
Fig. 7 is a structure diagram of a network-side device provided by an embodiment of the disclosure;
Fig. 8 is a structure diagram of a device provided by an embodiment of the disclosure; and
Fig. 9 is a structure diagram of another device provided by an embodiment of the disclosure.

### DETAILED DESCRIPTION

The preferred embodiments of the disclosure are elaborated below in combination with the accompanying drawings. It should be understood that the preferred embodiments elaborated below are only used for illustrating the disclosure and not intended to limit the disclosure.

Through the method for managing a D2D communication group in the embodiment of the disclosure, when it is needed to perform D2D group communication each time, a D2D communication group is established and a generated shared key is sent to all the devices in the D2D communication group, and after this D2D group communication of the D2D communication group ends, the D2D communication group and the shared key are deleted in time; in this way, there is no possibility that a new device needs to join because of the long existence of the group, and there is no possibility that it is needed to distribute the shared key to the new device; moreover, deleting the D2D communication group and the shared key in time improves the security of the shared key.

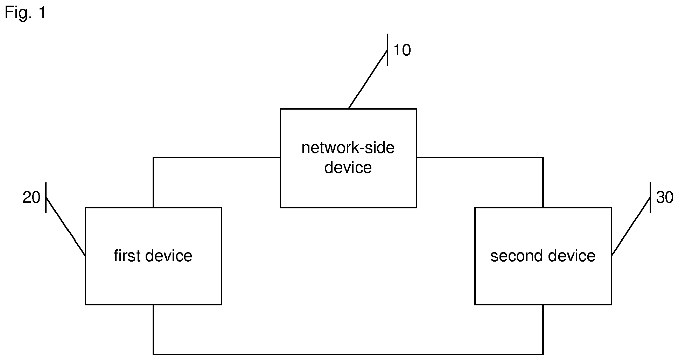

The embodiment of the disclosure provides a D2D communication system; Fig. 1 is a system architecture diagram of a D2D communication system in an embodiment of the disclosure; as shown in Fig. 1, the system includes: a network-side device 10, a first device 20 and a second device 30; the first device 20 herein can be one device, and the second device 30 can be one or more devices.

The network-side device 10 is arranged to establish a D2D group, store and manage D2D group information, and generate and issue a shared key;
the first device 20 is arranged to send data to the second device 30 based on the shared key, so as to perform D2D communication, herein the first device 20 and the second device 30 are in the same D2D group; and
the second device 30 is arranged to receive the data from the first device 20 based on the shared key, so as to perform the D2D communication.

In practical application, the network-side device 10 can be an evolved NodeB (eNB), or a Mobility Management Entity (MME), or a ProSE Function device, or a Home Subscriber Server (HSS), or a Serving General Packet Radio Service Support Node (SGSN), or other available network-side devices, which is not limited by the disclosure.

In practical application, the first device 20 and the second device 30 can be mobile terminals for communication in the mobile communication network. A Universal Integrated Circuit Card (UICC) is set on the first device 20 and the second device 30.

In combination with the embodiment of the disclosure, in the D2D communication system, the network-side device 10 is arranged to establish the D2D communication group, and issue the shared key generated for the D2D communication group to all devices in the D2D communication group, herein the shared key is used for the D2D communication of all the devices; the network-side device 10 is further arranged to determine that the D2D communication of the D2D communication group ends, and delete the D2D communication group and the shared key.

The first device 20 is arranged to send a group establishing request to the network-side device, herein the group establishing request is used for the network-side device 10 to establish the D2D communication group, receive the shared key from the network-side device 10, perform the D2D communication with the second device 30 in the D2D communication group based on the shared key, and after the D2D communication ends, send a communication ending message and delete the shared key.

The second device 30 is arranged to receive the shared key for the D2D communication group sent by the network-side device 10, perform the D2D communication with the first device 20 in the D2D communication group based on the shared key, receive the communication ending message from the first device 20, and delete the shared key.

Note that, functions of the first device 20 and the second device 30 can be either integrated on a physical entity, or realized by multiple physical entities, which is not limited by the disclosure.

The method for managing a D2D communication group in the embodiment of the disclosure is elaborated below with reference to the D2D communication system.

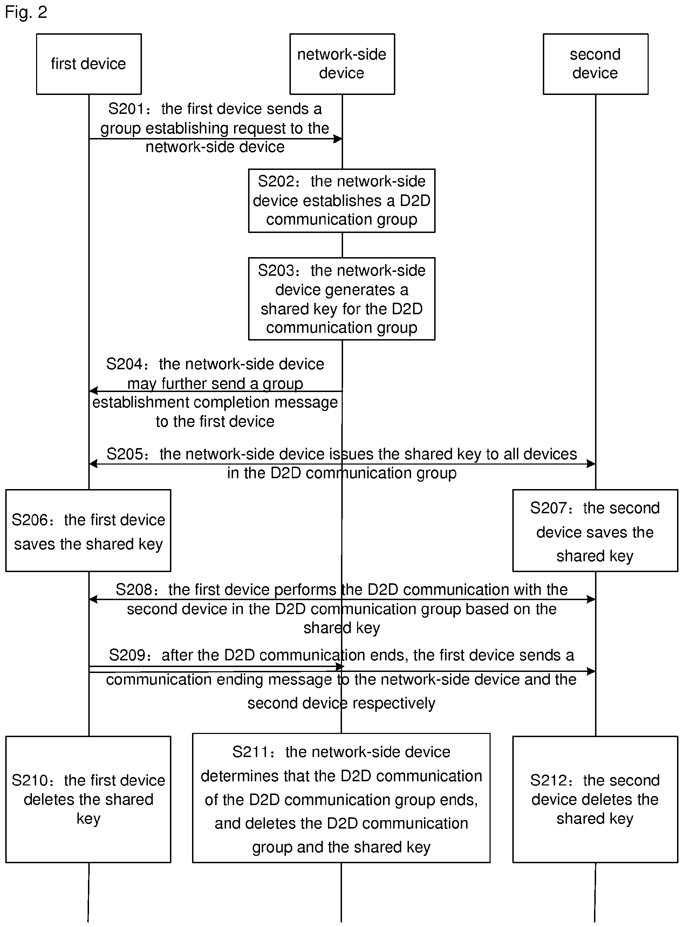

Fig. 2 is a flowchart of a method for a D2D communication system to manage a D2D communication group provided by an embodiment of the disclosure. As shown in Fig. 2, the method includes the following steps S201 to S212.

In S201, the first device sends a group establishing request to the network-side device;
specifically, the first device generates the group establishing request based on first identity information of the first device, like the International Mobile Subscriber Identification Number (IMSI), the International Mobile Equipment Identity (IMEI) or application identity information on the first device, and second identity information of the second device, like the IMSI, the IMEI or application identity information on the second device; at this point, the group establishing request carriers the first identity information and the second identity information; then, the first device sends the group establishing request to the network-side device.

In S202, the network-side device establishes a D2D communication group;
specifically, after receiving the group establishing request sent by the first device, the network-side device establishes the D2D communication group based on the first identity information and the second identity information, herein the D2D communication group is composed of the first device and the second device.

Based on the above solution, the network-side device may further allocate a group of identity information to the D2D group, so as to uniquely identify the D2D group composed of the first device and the second device.

In S203, the network-side device generates a shared key for the D2D communication group;
herein, the shared key is used for D2D communication between all devices in the D2D group, namely the first device and the second device.

In the present embodiment, the shared key can be either an encrypted key or an encrypted key and an integrity protection key, which is not limited by the disclosure.

In practical application, after S203, the method may also include the following steps.

In S204, the network-side device may further send a group establishment completion message to the first device;
herein, the group establishment completion message is used for informing the first device that the D2D group has been established;

In S205, the network-side device issues the shared key to all the devices in the D2D communication group;
in a specific implementation process, the network-side device may further send group identity information allocated for the D2D group to all the devices in the D2D group while issuing the shared key.

Correspondingly, except receiving the shared key, the first device may further receive the group identity information; likewise, the second also receives the group identity information while receiving the shared key.

In practical application, the network-side device can push the D2D shared key and/or the group identity information to the first device and the second device by way of pushing, or directly send the D2D shared key and/or the group identity information to the first device and the second device by way of security protection of an access layer. Certainly, there may further be other issuing ways, which is not limited by the disclosure.

In S206, the first device saves the shared key;
based on the above solution, the first device saves the shared key and the group identity information.

In S207, the second device saves the shared key;
based on the above solution, the second device saves the shared key and the group identity information.

Note that, S206 and S207 are not ordered; preferably, S206 and S207 are performed at the same time.

In S208, the first device performs the D2D communication with the second device in the D2D communication group based on the shared key;
that is, the first device sends communication data to the second device based on the shared key; after receiving the communication data, the second device verifies the security of the communication data based on the shared key, so as to realize the safe and reliable D2D communication between the first device and the second device.

In S209, after the D2D communication ends, the first device sends a communication ending message to the network-side device and the second device respectively.

In S210, the first device deletes the shared key;
based on the above solution, the first device may further delete the group identity information saved before.

In S211, after receiving the communication ending message, the network-side device determines that the D2D communication of the D2D communication group ends, and deletes the D2D communication group and the shared key;
based on the above solution, after determining that the D2D communication of the D2D communication group ends, the network-side device deletes the group identity information and the shared key.

In S212, the second device deletes the shared key;
based on the above solution, the second may further delete the group identity information saved before.

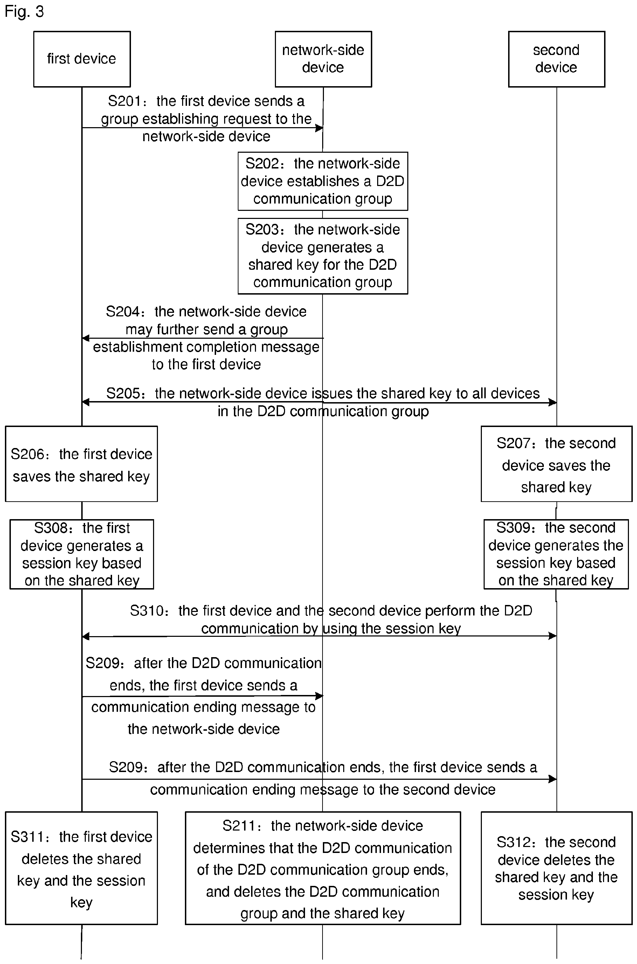

In another embodiment, Fig. 3 is a flowchart of another method for a D2D communication system to manage a D2D communication group provided by an embodiment of the disclosure. As shown in Fig. 3, for further ensure the security of communication, after S207, the method further includes the following steps S308 to S312.

In S308, the first device generates a session key based on the shared key;
specifically, in order to improve the security of the D2D communication, when the first device is about to perform the D2D communication with the second device, first, the first device sends a communication request to the second device, herein the communication request can carry the group identity information and a random number or any other parameter information for ensuring freshness of the key; furthermore, the first device generates the session key by bringing the shared key and the random number or the parameter information for ensuring freshness of the key in a key generation algorithm.

In S309, the second device generates the session key based on the shared key;
specifically, after receiving the communication request, the second device sends a communication response to the first device and establishes a D2D communication connection with the first device; furthermore, the second device generates the session key that is the same as the first device by bringing the shared key and the random number or the parameter information for ensuring freshness of the key in the key generation algorithm that is the same as the first device.

Certainly, the session key may further be generated by other key generation algorithms, which is not limited by the disclosure.

Note that, S308 and S309 are not ordered; preferably, S206 and S207 are performed at the same time.

In S310, the first device and the second device perform the D2D communication by using the session key;
specifically, the first device first encrypts the data to be sent to the second device by using the session key, and then sends the data to the second device; after receiving the data from the first device, the second device decrypts the data by using the session key; in this way, when the first device and the second device perform a session each time, they generate the same session key, so the reliability of session is greatly improved in the process of the D2D communication between the first device and the second device.

Correspondingly, after S209, the method further includes the following steps.

In S311, the first device deletes the shared key and the session key.

In S312, the second device deletes the shared key and the session key.

Based on the above solution, the first device and the second device may further delete the group identity information while deleting the shared key and the session key.

Now, the flow that the D2D communication system manages the D2D communication group is completed.

It can be seen from above that when performing the D2D communication once, the network-side device re-establishes a D2D group and issues a new shared key, so that when there is a new device joining the D2D group, the network-side device issues the shared key to all the devices in the group while establishing a new group, thereby preventing the risk of divulging the key caused by issuing the key separately, ensuring the security of the D2D communication, and giving consideration to the dynamic change of the devices in the D2D group.

The method for managing a D2D communication group is elaborated below from the perspective of the network-side device.

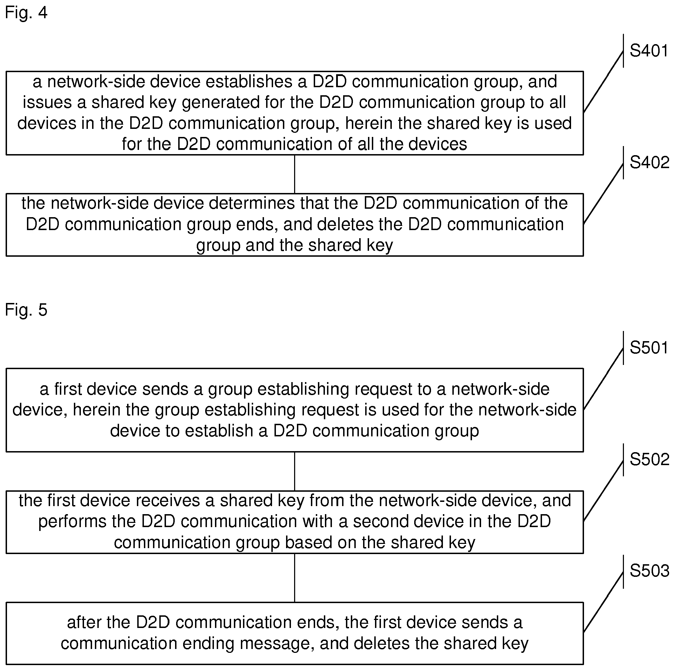

Fig. 4 is a flowchart of a method for the network-side device to manage a D2D communication group provided by an embodiment of the disclosure; as shown in Fig. 4, the method includes the following steps S401 and S402.

In S401, the network-side device establishes the D2D communication group, and issues the shared key generated for the D2D communication group to all the devices in the D2D communication group, herein the shared key is used for the D2D communication of all the devices;
based on the above solution, S401 may include that: the network-side device receives the group establishing request sent by the first device, herein the group establishing request carries the first identity information of the first device and the second identity information of the second device; and the network-side device establishes the D2D communication group based on the first identity information and the second identity information.

In S402, the network-side device determines that the D2D communication of the D2D communication group ends, and deletes the D2D communication group and the shared key.

Specifically, the step that the network-side device determines that the D2D communication of the D2D communication group ends includes that: the network-side device receives the communication ending message from the first device, and confirms that the D2D communication of the D2D communication group ends.

Based on the above solution, after S401 and before S402, the method further includes that: the network-side device sends the group identity information of the D2D communication group and the shared key to all the devices;
correspondingly, S402 may include that: the network-side device deletes the group identity information and the shared key.

The method for managing a D2D communication group is elaborated below from the perspective of the first device.

Fig. 5 is a flowchart of a method for the first device to manage a D2D communication group provided by an embodiment of the disclosure; as shown in Fig. 5, the method includes the following steps S501 to S503.

In S501, the first device sends the group establishing request to the network-side device, herein the group establishing request is used for the network-side device to establish the D2D communication group;
specifically, S501 may include that: the first device generates the group establishing request carrying the first identity information of the first device and the second identity information of the second device; and the first device sends the group establishing request to the network-side device.

In S502, the first device receives the shared key from the network-side device, and performs the D2D communication with the second device in the D2D communication group based on the shared key;
in a specific implementation process, the step that the first device performs the D2D communication with the second device in the D2D communication group based on the shared key includes that: the first device generates the session key based on the shared key, and performs the D2D communication with the second by using the session key.

In S503, after the D2D communication ends, the first device sends the communication ending message, and deletes the shared key.

Specifically, the first device sends the communication ending message to the network-side device and the second device respectively, and deletes the shared key.

Based on the above solution, the first device may further delete the session key while deleting the shared key.

In another embodiment, before S502 that the first device performs the D2D communication with the second device in the D2D communication group based on the shared key, the method may also include that: the first device receives the group identity information sent by the network-side device.

Correspondingly, the step that the first device sends the communication ending message in S503 includes that: the first device sends the communication ending message carrying the group identity information.

Based on the above solution, the first device may further delete the group identity information while deleting the shared key.

The method for managing a D2D communication group is elaborated below from the perspective of the second device.

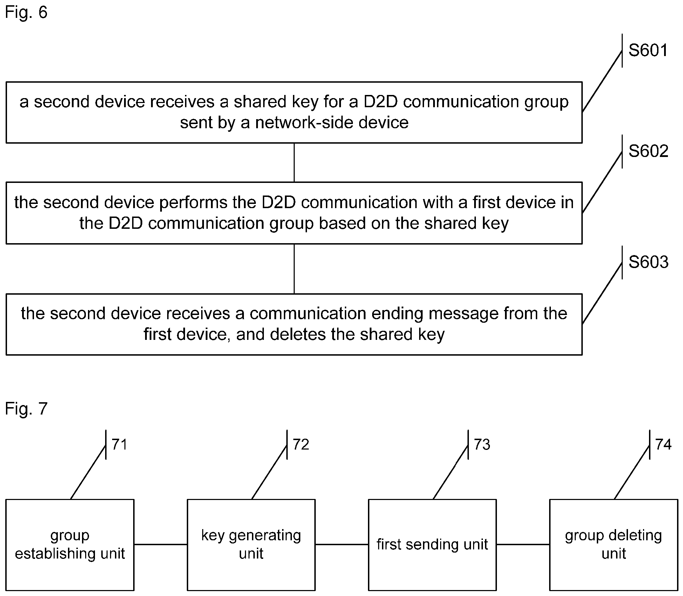

Fig. 6 is a flowchart of a method for the second device to manage a D2D communication group provided by an embodiment of the disclosure; as shown in Fig. 6, the method includes the following steps S601 to S603.

In S601, the second device receives the shared key for the D2D communication group sent by the network-side device.

In S602, the second device performs the D2D communication with the first device in the D2D communication group based on the shared key.

In S603, the second device receives the communication ending message from the first device, and deletes the shared key.

In a specific implementation process, the second device may further receive the group identity information while receiving the shared key, then the second device may further delete the group identity information while deleting the shared key.

In another embodiment, S602 includes that: the second device generates the session key based on the shared key; and the second device performs the D2D communication with the first device by using the session key.

Correspondingly, the second device may further delete the session key while deleting the shared key.

Based on the same inventive concept, the embodiment of the disclosure also provides a network-side device, which is consistent with the network-side device in the above one or more embodiments.

Fig. 7 is a structure diagram of a network-side device provided by an embodiment of the disclosure; as shown in Fig. 7, the network-side device includes: a group establishing unit 71, a key generating unit 72, a first sending unit 73 and a group deleting unit 74; herein, the group establishing unit 71 is arranged to establish the D2D communication group; the key generating unit 72 is arranged to generate the shared key for the D2D communication group, herein the shared key is used for the D2D communication of all the devices in the D2D communication group; and the first sending unit 73 is arranged to issue the shared key to all the devices; the group deleting unit 74 is arranged to determine that the D2D communication of the D2D communication group ends, and delete the D2D communication group and the shared key.

Based on the above solution, the group establishing unit 71 includes: a receiving subunit arranged to receive the group establishing request sent by the first device, herein the group establishing request carries the first identity information of the first device and the second identity information of the second device; and a group establishing subunit arranged to establish the D2D communication group based on the first identity information and the second identity information.

Based on the above solution, the first sending unit 73 is further arranged to, after the group establishing unit generates the shared key for the D2D communication group, and before the deleting unit determines that the D2D communication of the D2D communication group ends, send the group identity information of the D2D communication group and the shared key to all the devices; the group deleting unit 74 is further arranged to delete the group identity information and the shared key.

Based on the above solution, the group deleting unit 74 is arranged to receive the communication ending message from the first device, and confirm that the D2D communication of the D2D communication group ends.

All of the group establishing unit 71, the key generating unit 72, the first sending unit 73 and the group deleting unit 74 can be set in either processors like CPU and ARM of the device, or an embedded controller or a system-on-chip, which is not limited by the disclosure.

Based on the same inventive concept, the embodiment of the disclosure also provides a device, which is consistent with the first device in the above one or more embodiments.

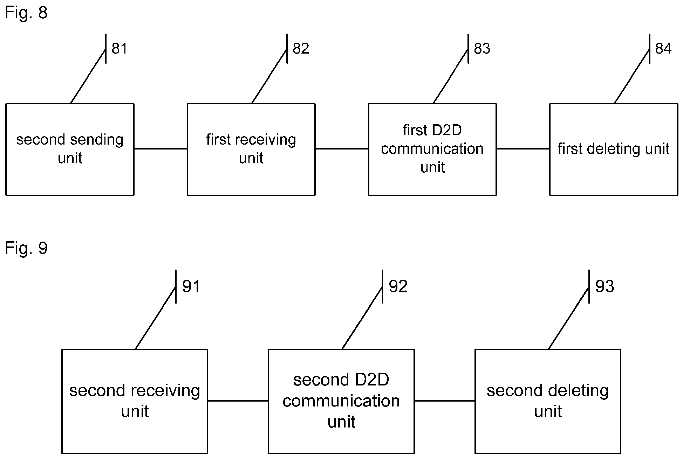

Fig. 8 is a structure diagram of a device provided by an embodiment of the disclosure; as shown in Fig. 8, the device includes: a second sending unit 81, a first receiving unit 82, a first D2D communication unit 83 and a first deleting unit 84; herein the second sending unit 81 is arranged to send the group establishing request to the network-side device, herein the group establishing request is used for the network-side device to establish the D2D communication group; the second sending unit is further arranged to, after the D2D communication with the second device in the D2D communication group ends, send the communication ending message; the first receiving unit 82 is arranged to receive the shared key from the network-side device; the first D2D communication unit 83 is arranged to perform the D2D communication based on the shared key; and the first deleting unit 84 is arranged to delete the shared key.

Based on the above solution, the second sending unit 81 includes a generating subunit arranged to generate the group establishing request carrying the first identity information of the first device and the second identity information of the second device; and a sending subunit arranged to send the group establishing request to the network-side device.

Based on the above solution, the first receiving unit 82 is arranged to, before the first D2D communication unit performs the D2D communication based on the shared key, receive the group identity information sent by the network-side device; the second sending unit is arranged to send the communication ending message carrying the group identity information.

Based on the above solution, the first D2D communication unit is arranged to generate the session key based on the shared key, and perform the D2D communication with the second device by using the session key.

All of the second sending unit 81, the first receiving unit 82 and the first deleting unit 84 can be set in the processors like CPU and ARM of the device, or the embedded controller or the system-on-chip, which is not limited by the disclosure.

Based on the same inventive concept, the embodiment of the disclosure also provides a device, which is consistent with the second device in the above one or more embodiments.

Fig. 9 is a structure diagram of another device provided by an embodiment of the disclosure; as shown in Fig. 9, the device includes: a second receiving unit 91, a second D2D communication unit 92 and a second deleting unit 93; herein, the second receiving unit 91 is arranged to receive the shared key for the D2D communication group from the network-side device; the second D2D communication unit 92 is arranged to perform the D2D communication with the first device in the D2D communication group based on the shared key, and receive the communication ending message from the first device; the second deleting unit 93 is arranged to delete the shared key.

Based on the above solution, the second D2D communication unit 92 is further arranged to generate the session key based on the shared key, and perform the D2D communication with the first device by using the session key.

All of the second receiving unit 91, the second D2D communication unit 92 and the second deleting unit 93 can be set in the processors like CPU and ARM of the device, or the embedded controller or the system-on-chip, which is not limited by the disclosure.

The embodiment of the disclosure also records a computer storage medium, in which a computer program is stored; the computer program is used for perform the method for managing a D2D communication group, specifically one or more of the method as shown in Fig. 2 to Fig. 6.

The computer storage media can be various media that can store program codes, such as a U disk, a mobile hard disk, a Read-Only Memory (ROM), a Random Access Memory (RAM), a magnetic disk or a compact disc; in some embodiments, the computer storage media is the instantaneous storage media.

Those skilled in the art should understand that the embodiments of the disclosure can be provided as a method, a system or a computer program product. Thus, forms of hardware embodiments, software embodiments or embodiments integrating software and hardware can be adopted in the disclosure. Moreover, a form of the computer program product implemented on one or more computer available storage media (including, but not limited to, a disk memory, an optical memory and the like) containing computer available program codes can be adopted in the disclosure.

The disclosure is described with reference to flowcharts and/or block diagrams of the method, the equipment (system) and the computer program product according to the embodiments of the disclosure. It should be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

These computer program instructions may further be stored in a computer readable memory capable of guiding the computers or the other programmable data processing devices to work in a specific mode, so that a manufactured product including an instruction apparatus is generated via the instructions stored in the computer readable memory, and the instruction apparatus realizes the functions assigned in one or more flows of the flowcharts and/or one or more blocks of the block diagrams.

These computer program instructions may further be loaded to the computers or the other programmable data processing devices, so that processing realized by the computers is generated by executing a series of operation steps on the computers or the other programmable devices, and therefore the instructions executed on the computers or the other programmable devices provide a step of realizing the functions assigned in one or more flows of the flowcharts and/or one or more blocks of the block diagrams.

The above is only the preferred embodiments of the disclosure and not intended to limit the scope of protection of the disclosure. Any modification made according to the principle of the disclosure should fall within the scope of protection of the disclosure without departing from the scope of the invention as defined in the appended claims.

### INDUSTRIAL APPLICABILITY

In the embodiments of the disclosure, in the process of managing a D2D communication group, when it is needed to perform D2D group communication, a D2D communication group is established and a shared key is generated; after the D2D group communication ends, the established D2D communication group and the shared key are deleted, then all devices needing communication join in the D2D communication group at once, there is no device joining subsequently; in this way, the problem of the device joining in the D2D communication group and the security of the shared key is solved well, and the security of the D2D group communication is improved.

## Claims

1. A method for managing a Device to Device, D2D, communication group, comprising:
upon receiving a group establishing request sent by a first device, establishing, by a network-side device, a D2D communication group, and issuing a shared key generated for the D2D communication group to all devices in the D2D communication group, wherein the group establishing request is used for the network-side device to establish the D2D communication group, and the shared key is used for D2D communication of all the devices (S401);
**characterized in that**, upon receiving a communication ending message sent by the first device to the network-side device and a second device within the D2D communication group, determining, by the network-side device, that the D2D communication of the D2D communication group ends, and deleting the D2D communication group and the shared key (S402), wherein the first and second device are mobile terminals.

2. The method according to claim 1, wherein the group establishing request carries first identity information of the first device and second identity information of the second device; and wherein establishing, by the network-side device, the D2D communication group comprises:
establishing, by the network-side device, the D2D communication group based on the first identity information and the second identity information.

3. The method according to claim 1, further comprising: after the network-side device generates the shared key for the D2D communication group, and before the network-side device determines that the D2D communication of the D2D communication group ends,
sending, by the network-side device, group identity information of the D2D communication group and the shared key to all the devices in the D2D communication group;
wherein deleting, by the network-side device, the D2D communication group and the shared key comprises:
deleting, by the network-side device, the group identity information and the shared key.

4. The method according to claim 1, wherein determining, by the network-side device, that the D2D communication of the D2D communication group ends comprises:
confirming that the D2D communication of the D2D communication group ends, upon receiving by the network-side device the communication ending message from the first device.

5. A method for managing a Device to Device, D2D, communication group, comprising:
sending, by a first device, a group establishing request to a network-side device, wherein the group establishing request is used for the network-side device to establish a D2D communication group (S501);
receiving, by the first device, a shared key from the network-side device, and performing D2D communication with a second device in the D2D communication group based on the shared key (S502);
**characterized in that**, after the D2D communication ends, sending, by the first device, a communication ending message to the network-side device and the second device which then deletes the shared key, and deleting the shared key (S503), wherein the first and second device are mobile terminals.

6. The method according to claim 5, wherein before sending, by the first device, the group establishing request to the network-side device the method further comprises:
generating, by the first device, the group establishing request carrying first identity information of the first device and second identity information of the second device.

7. The method according to claim 5, wherein performing, by the first device, the D2D communication based on the shared key comprises:
generating, by the first device, a session key based on the shared key; and
performing, by the first device, the D2D communication with the second device by using the session key.

8. A network-side device, comprising: a group establishing unit (71), a key generating unit (72), a first sending unit (73) and a group deleting unit (74),
wherein the group establishing unit (71) is arranged to: upon reception of a group establishing request sent by a first device, establish a Device to Device, D2D, communication group, the group establishing request is used for the network-side device to establish the D2D communication group;
the key generating unit (72) is arranged to generate a shared key for the D2D communication group, wherein the shared key is used for D2D communication of all devices in the D2D communication group; and
the first sending unit (73) is arranged to issue the shared key to all the devices;
**characterized in that**, the group deleting unit (74) is arranged to: upon reception of a communication ending message sent by the first device to the network-side device and a second device within the D2D communication group, determine that the D2D communication of the D2D communication group ends, and delete the D2D communication group and the shared key, wherein the first and second device are mobile terminals.

9. The network-side device according to claim 8, wherein the group establishing unit (71) comprises:
a receiving subunit arranged to receive a group establishing request sent by a first device, wherein the group establishing request carries first identity information of the first device and second identity information of a second device; and
a group establishing subunit arranged to establish the D2D communication group based on the first identity information and the second identity information.

10. The network-side device according to claim 8, wherein the first sending unit (73) is further arranged to, after the group establishing unit generates the shared key for the D2D communication group and before the deleting unit (74) determines that the D2D communication of the D2D communication group ends, send group identity information of the D2D communication group and the shared key to all the devices;
the group deleting unit (74) is further arranged to delete the group identity information and the shared key.

11. The network-side device according to claim 8, wherein the group deleting unit (74) is arranged to receive a communication ending message from the first device, and confirm that the D2D communication of the D2D communication group ends.

12. A device, comprising: a second sending unit (81), a first receiving unit (82), a first Device to Device, D2D, communication unit (83) and a first deleting unit (84),
wherein the second sending unit (81) is arranged to send a group establishing request to a network-side device, wherein the group establishing request is used for the network-side device to establish a D2D communication group; the second sending unit (81) is further arranged to, after D2D communication with a second device in the D2D communication group ends, send a communication ending message to the network-side device and the second device which then deletes a shared key from the network-side device;
the first receiving unit (82) is arranged to receive the shared key from the network-side device;
the first D2D communication unit (83) is arranged to perform the D2D communication based on the shared key; and
the first deleting unit (84) is arranged to delete the shared key, wherein the device and the second device are mobile terminals.

13. The device according to claim 12, wherein the second sending unit (81) comprises:
a generating subunit arranged to generate the group establishing request carrying first identity information of the first device and second identity information of the second device; and
a sending subunit arranged to send the group establishing request to the network-side device.

14. The device according to claim 12, wherein the first D2D communication unit (83) is arranged to generate a session key based on the shared key, and perform the D2D communication with the second device by using the session key.

15. A computer program comprising computer program code means adapted to perform all the steps of the method according to any of the claims 1 to 4 or any of the claims 5 to 7, when said program is run on a computer.

## Patentansprüche

1. Verfahren zum Verwalten einer Gerät-zu-Gerät, D2D, -Kommunikationsgruppe, umfassend:
nach Empfang einer Gruppeneinrichtungsanfrage, die von einem ersten Gerät gesendet wird, Einrichten einer D2D-Kommunikationsgruppe durch ein netzwerkseitiges Gerät und Ausgeben eines gemeinsam genutzten Schlüssels, der für die D2D-Kommunikationsgruppe erzeugt wird, an alle Geräte in der D2D-Kommunikationsgruppe, wobei die Gruppeneinrichtungsanfrage zum Einrichten der D2D-Kommunikationsgruppe durch das netzwerkseitige Gerät genutzt wird und der gemeinsam genutzte Schlüssel für die D2D-Kommunikation aller Geräte genutzt wird (S401),
**gekennzeichnet durch**, nach Empfang einer Kommunikationsbeendigungsnachricht, die von dem ersten Gerät an das netzwerkseitige Gerät und ein zweites Gerät innerhalb der D2D-Kommunikationsgruppe gesendet wird, Bestimmen durch das netzwerkseitige Gerät, dass die D2D-Kommunikation der D2D-Kommunikationsgruppe endet, und Löschen der D2D-Kommunikationsgruppe und des gemeinsam genutzten Schlüssels (S402), wobei das erste und das zweite Gerät mobile Endgeräte sind.

2. Verfahren nach Anspruch 1,
wobei die Gruppeneinrichtungsanfrage erste Identitätsinformationen des ersten Geräts und zweite Identitätsinformationen des zweiten Geräts trägt und wobei das Einrichten der D2D-Kommunikationsgruppe durch das netzwerkseitige Gerät Folgendes umfasst:
Einrichten der D2D-Kommunikationsgruppe durch das netzwerkseitige Gerät basierend auf den ersten Identitätsinformationen und den zweiten Identitätsinformationen.

3. Verfahren nach Anspruch 1, ferner Folgendes umfassend: nachdem das netzwerkseitige Gerät den gemeinsam genutzten Schlüssel für die D2D-Kommunikationsgruppe erzeugt und bevor das netzwerkseitige Gerät bestimmt, dass die D2D-Kommunikation der D2D-Kommunikationsgruppe endet,
Senden von Gruppenidentitätsinformationen der D2D-Kommunikationsgruppe und des gemeinsam genutzten Schlüssels durch das netzwerkseitige Gerät an alle Geräte in der D2D-Kommunikationsgruppe,
wobei das Löschen der D2D-Kommunikationsgruppe und des gemeinsam genutzten Schlüssels durch das netzwerkseitige Gerät Folgendes umfasst:
Löschen der Gruppenidentitätsinformationen und des gemeinsam genutzten Schlüssels durch das netzwerkseitige Gerät.

4. Verfahren nach Anspruch 1, wobei das Bestimmen durch das netzwerkseitige Gerät, dass die D2D-Kommunikation der D2D-Kommunikationsgruppe endet, Folgendes umfasst:
Bestätigen, dass die D2D-Kommunikation der D2D-Kommunikationsgruppe endet, nach Empfang der Kommunikationsbeendigungsnachricht von dem ersten Gerät durch das netzwerkseitige Gerät.

5. Verfahren zum Verwalten einer Gerät-zu-Gerät, D2D, -Kommunikationsgruppe, umfassend:
Senden einer Gruppeneinrichtungsanfrage an ein netzwerkseitiges Gerät durch ein erstes Gerät, wobei die Gruppeneinrichtungsanfrage zum Einrichten einer D2D-Kommunikationsgruppe durch das netzwerkseitige Gerät genutzt wird (S501),
Empfangen eines gemeinsam genutzten Schlüssels von dem netzwerkseitiges Gerät durch das erste Gerät und Ausführen der D2D-Kommunikation mit einem zweiten Gerät in der D2D-Kommunikationsgruppe basierend auf dem gemeinsam genutzten Schlüssel (S502),
**gekennzeichnet durch**, nachdem die D2D-Kommunikation endet, Senden einer Kommunikationsbeendigungsnachricht durch das erste Gerät an das netzwerkseitige Gerät und das zweite Gerät, das dann den gemeinsam genutzten Schlüssel löscht, und Löschen des gemeinsam genutzten Schlüssels (S503), wobei das erste und das zweite Gerät mobile Endgeräte sind.

6. Verfahren nach Anspruch 5, wobei das Verfahren vor dem Senden der Gruppeneinrichtungsanfrage an das netzwerkseitige Gerät durch das erste Gerät ferner Folgendes umfasst:
Erzeugen der Gruppeneinrichtungsanfrage, die erste Identitätsinformationen des ersten Geräts und zweite Identitätsinformationen des zweiten Geräts trägt, durch das erste Gerät.

7. Verfahren nach Anspruch 5, wobei das Ausführen der D2D-Kommunikation durch das erste Gerät basierend auf dem gemeinsam genutzten Schlüssel Folgendes umfasst:
Erzeugen eines Sitzungsschlüssels basierend auf dem gemeinsam genutzten Schlüssel durch das erste Gerät und
Ausführen der D2D-Kommunikation mit dem zweiten Gerät unter Nutzung des Sitzungsschlüssels durch das erste Gerät.

8. Netzwerkseitiges Gerät, umfassend: eine Gruppeneinrichtungseinheit (71), eine Schlüsselerzeugungseinheit (72), eine erste Sendeinheit (73) und eine Gruppenlöschungseinheit (74),
wobei die Gruppeneinrichtungseinheit (71) für Folgendes eingerichtet ist: nach Empfang einer Gruppeneinrichtungsanfrage, die von einem ersten Gerät gesendet wird, Einrichten einer Gerät-zu-Gerät, D2D, -Kommunikationsgruppe, wobei die Gruppeneinrichtungsanfrage zum Einrichten der D2D-Kommunikationsgruppe durch das netzwerkseitige Gerät genutzt wird,
die Schlüsselerzeugungseinheit (72) dafür eingerichtet ist, einen gemeinsam genutzten Schlüssel für die D2D-Kommunikationsgruppe zu erzeugen, wobei der gemeinsam genutzte Schlüssel für die D2D-Kommunikation aller Geräte in der D2D-Kommunikationsgruppe genutzt wird, und
die erste Sendeeinheit (73) dafür eingerichtet ist, den gemeinsam genutzten Schlüssel an alle Geräte auszugeben,
**dadurch gekennzeichnet, dass** die Gruppenlöschungseinheit (74) für Folgendes eingerichtet ist: nach Empfang einer Kommunikationsbeendigungsnachricht, die von dem ersten Gerät an das netzwerkseitige Gerät und ein zweites Gerät innerhalb der D2D-Kommunikationsgruppe gesendet wird, Bestimmen, dass die D2D-Kommunikation der D2D-Kommunikationsgruppe endet, und Löschen der D2D-Kommunikationsgruppe und des gemeinsam genutzten Schlüssels, wobei das erste und das zweite Gerät mobile Endgeräte sind.

9. Netzwerkseitiges Gerät nach Anspruch 8, wobei die Gruppeneinrichtungseinheit (71) Folgendes umfasst:
eine Empfangsteileinheit, die dafür eingerichtet ist, eine Gruppeneinrichtungsanfrage zu empfangen, die von einem ersten Gerät gesendet wird, wobei die Gruppeneinrichtungsanfrage erste Identitätsinformationen des ersten Geräts und zweite Identitätsinformationen eines zweiten Geräts trägt, und
eine Gruppeneinrichtungs-Teileinheit, die dafür eingerichtet ist, die D2D-Kommunikationsgruppe basierend auf den ersten Identitätsinformationen und den zweiten Identitätsinformationen einzurichten.

10. Netzwerkseitiges Gerät nach Anspruch 8, wobei die erste Sendeeinheit (73) ferner dafür eingerichtet ist, Gruppenidentitätsinformationen der D2D-Kommunikationsgruppe und den gemeinsam genutzten Schlüssel an alle Geräte zu senden, nachdem die Gruppeneinrichtungseinheit den gemeinsam genutzten Schlüssel für die D2D-Kommunikationsgruppe erzeugt und bevor die Löschungseinheit (74) bestimmt, dass die D2D-Kommunikation der D2D-Kommunikationsgruppe endet,
wobei die Gruppenlöschungseinheit (74) ferner dafür eingerichtet ist, die Gruppenidentitätsinformationen und den gemeinsam genutzten Schlüssel zu löschen.

11. Netzwerkseitiges Gerät nach Anspruch 8, wobei die Gruppenlöschungseinheit (74) dafür eingerichtet ist, eine Kommunikationsbeendigungsnachricht von dem ersten Gerät zu empfangen und zu bestätigen, dass die D2D-Kommunikation der D2D-Kommunikationsgruppe endet.

12. Gerät, Folgendes umfassend: eine zweite Sendeeinheit (81), eine erste Empfangseinheit (82), eine erste Gerät-zu-Gerät, D2D, -Kommunikationseinheit (83) und eine erste Löschungseinheit (84),
wobei die zweite Sendeeinheit (81) dafür eingerichtet ist, eine Gruppeneinrichtungsanfrage an ein netzwerkseitiges Gerät zu senden, wobei die Gruppeneinrichtungsanfrage zum Einrichten der D2D-Kommunikationsgruppe durch das netzwerkseitige Gerät genutzt wird, wobei die zweite Sendeeinheit (81) ferner dafür eingerichtet ist, eine Kommunikationsbeendigungsnachricht an das netzwerkseitige Gerät und ein zweites Gerät zu senden, das dann einen gemeinsam genutzten Schlüssel von dem netzwerkseitigen Gerät löscht, nachdem die D2D-Kommunikation mit dem zweiten Gerät in der D2D-Kommunikationsgruppe endet,
wobei die erste Empfangseinheit (82) dafür eingerichtet ist, den gemeinsam genutzten Schlüssel von dem netzwerkseitigen Gerät zu empfangen,
wobei die erste D2D-Kommunikationseinheit (83) dafür eingerichtet ist, die D2D-Kommunikation basierend auf dem gemeinsam genutzten Schlüssel auszuführen, und
die erste Löschungseinheit (84) dafür eingerichtet ist, den gemeinsam genutzten Schlüssel zu löschen, wobei das Gerät und das zweite Gerät mobile Endgeräte sind.

13. Gerät nach Anspruch 12, wobei die zweite Sendeeinheit (81) Folgendes umfasst:
eine Erzeugungsteileinheit, die dafür eingerichtet ist, die Gruppeneinrichtungsanfrage, die erste Identitätsinformationen des ersten Geräts und zweite Identitätsinformationen des zweiten Geräts trägt, zu erzeugen, und
eine Sendeteileinheit, die dafür eingerichtet ist, die Gruppeneinrichtungsanfrage an das netzwerkseitige Gerät zu senden.

14. Gerät nach Anspruch 12, wobei die erste D2D-Kommunikationseinheit (83) dafür eingerichtet ist, einen Sitzungsschlüssel basierend auf dem gemeinsam genutzten Schlüssel zu erzeugen und die D2D-Kommunikation mit dem zweiten Gerät unter Nutzung des Sitzungsschlüssels auszuführen.

15. Computerprogramm, das Computerprogrammcodemittel umfasst, die angepasst sind, um alle Schritte des Verfahrens nach einem der Ansprüche 1 bis 4 oder einem der Ansprüche 5 bis 7 auszuführen, wenn das Programm auf einem Computer läuft.

## Revendications

1. Procédé de gestion d'un groupe de communication de dispositif à dispositif, D2D, comprenant l'étape ci-dessous consistant à :
suite à la réception d'une demande d'établissement de groupe envoyée par un premier dispositif, établir, par le biais d'un dispositif côté réseau, un groupe de communication D2D, et délivrer une clé partagée générée pour le groupe de communication D2D à tous les dispositifs dans le groupe de communication D2D, dans lequel la demande d'établissement de groupe est utilisée pour permettre au dispositif côté réseau d'établir le groupe de communication D2D, et la clé partagée est utilisée pour une communication D2D de tous les dispositifs (S401) ;
**caractérisé en ce que** le procédé comprend en outre les étapes consistant à, lors de la réception d'un message de fin de communication envoyé par le premier dispositif au dispositif côté réseau et à un second dispositif au sein du groupe de communication D2D, déterminer, par le biais du dispositif côté réseau, que la communication D2D du groupe de communication D2D prend fin, et supprimer le groupe de communication D2D et la clé partagée (S402), dans lequel les premier et second dispositifs sont des terminaux mobiles.

2. Procédé selon la revendication 1, dans lequel la demande d'établissement de groupe transporte des premières informations d'identité du premier dispositif et des secondes informations d'identité du second dispositif, et dans lequel l'étape d'établissement, par le dispositif côté réseau, du groupe de communication D2D, comprend l'étape ci-dessous consistant à :
établir, par le biais du dispositif côté réseau, le groupe de communication D2D sur la base des premières informations d'identité et des secondes informations d'identité.

3. Procédé selon la revendication 1, comprenant en outre l'étape ci-dessous consistant à : après que le dispositif côté réseau a généré la clé partagée pour le groupe de communication D2D, et avant que le dispositif côté réseau ne détermine que la communication D2D du groupe de communication D2D prend fin :
envoyer, par le biais du dispositif côté réseau, des informations d'identité de groupe du groupe de communication D2D et la clé partagée à tous les dispositifs au sein du groupe de communication D2D ;
dans lequel l'étape de suppression, par le dispositif côté réseau, du groupe de communication D2D et de la clé partagée comprend l'étape ci-dessous consistant à :
supprimer, par le biais du dispositif côté réseau, les informations d'identité de groupe et la clé partagée.

4. Procédé selon la revendication 1, dans lequel l'étape de détermination, par le dispositif côté réseau, que la communication D2D du groupe de communication D2D prend fin, comprend l'étape ci-dessous consistant à :
confirmer que la communication D2D du groupe de communication D2D prend fin, suite à la réception, par le dispositif côté réseau, du message de fin de communication en provenance du premier dispositif.

5. Procédé de gestion d'un groupe de communication de dispositif à dispositif, D2D, comprenant les étapes ci-dessous consistant à :
envoyer, par le biais d'un premier dispositif, une demande d'établissement de groupe à un dispositif côté réseau, dans lequel la demande d'établissement de groupe est utilisée pour permettre au dispositif côté réseau d'établir un groupe de communication D2D (S501) ;
recevoir, par le biais du premier dispositif, une clé partagée en provenance du dispositif côté réseau, et mettre en oeuvre une communication D2D avec un second dispositif au sein du groupe de communication D2D sur la base de la clé partagée (S502) ;
**caractérisé en ce que** le procédé comprend les étapes consistant à, après que la communication D2D a pris fin, envoyer, par le biais du premier dispositif, un message de fin de communication au dispositif côté réseau et au second dispositif lequel supprime ensuite la clé partagée, et supprimer la clé partagée (S503), dans lequel les premier et second dispositifs sont des terminaux mobiles.

6. Procédé selon la revendication 5, dans lequel, avant d'envoyer, par le biais du premier dispositif, la demande d'établissement de groupe, au dispositif côté réseau, le procédé comprend en outre l'étape ci-dessous consistant à :
générer, par le biais du premier dispositif, la demande d'établissement de groupe transportant les premières informations d'identité du premier dispositif et les secondes informations d'identité du second dispositif.

7. Procédé selon la revendication 5, dans lequel l'étape de mise en oeuvre, par le premier dispositif, de la communication D2D, sur la base de la clé partagée, comprend les étapes ci-dessous consistant à :
générer, par le biais du premier dispositif, une clé de session sur la base de la clé partagée ; et
mettre en oeuvre, par le biais du premier dispositif, la communication D2D avec le second dispositif, en faisant appel à la clé de session.

8. Dispositif côté réseau, comprenant : une unité d'établissement de groupe (71), une unité de génération de clé (72), une première unité d'envoi (73) et une unité de suppression de groupe (74),
dans lequel l'unité d'établissement de groupe (71) est agencée de manière à : suite à la réception d'une demande d'établissement de groupe envoyée par un premier dispositif, établir un groupe de communication de dispositif à dispositif, D2D, la demande d'établissement de groupe étant utilisée en vue de permettre au dispositif côté réseau d'établir le groupe de communication D2D ;
l'unité de génération de clé (72) est agencée de manière à générer une clé partagée pour le groupe de communication D2D, dans lequel la clé partagée est utilisée pour une communication D2D de tous les dispositifs au sein du groupe de communication D2D ; et
la première unité d'envoi (73) est agencée de manière à délivrer la clé partagée à tous les dispositifs ;
**caractérisé en ce que** l'unité de suppression de groupe (74) est agencée de manière à : suite à la réception d'un message de fin de communication envoyé par le premier dispositif au dispositif côté réseau et à un second dispositif au sein du groupe de communication D2D, déterminer que la communication D2D du groupe de communication D2D prend fin, et supprimer le groupe de communication D2D et la clé partagée, dans lequel les premier et second dispositifs sont des terminaux mobiles.

9. Dispositif côté réseau selon la revendication 8, dans lequel l'unité d'établissement de groupe (71) comprend :
une sous-unité de réception agencée de manière à recevoir une demande d'établissement de groupe envoyée par un premier dispositif, dans lequel la demande d'établissement de groupe transporte des premières informations d'identité du premier dispositif et des secondes informations d'identité d'un second dispositif ; et
une sous-unité d'établissement de groupe agencée de manière à établir le groupe de communication D2D sur la base des premières informations d'identité et des secondes informations d'identité.

10. Dispositif côté réseau selon la revendication 8, dans lequel la première unité d'envoi (73) est en outre agencée de manière à, après que l'unité d'établissement de groupe a généré la clé partagée pour le groupe de communication D2D, et avant que l'unité de suppression de groupe (74) ne détermine que la communication D2D du groupe de communication D2D prend fin, envoyer des informations d'identité de groupe du groupe de communication D2D et la clé partagée, à tous les dispositifs ; et
l'unité de suppression de groupe (74) est en outre agencée de manière à supprimer les informations d'identité de groupe et la clé partagée.

11. Dispositif côté réseau selon la revendication 8, dans lequel l'unité de suppression de groupe (74) est agencée de manière à recevoir un message de fin de communication en provenance du premier dispositif, et à confirmer que la communication D2D du groupe de communication D2D prend fin.

12. Dispositif, comprenant : une seconde unité d'envoi (81), une première unité de réception (82), une première unité de communication de dispositif à dispositif, D2D, (83), et une première unité de suppression (84),
dans lequel la seconde unité d'envoi (81) est agencée de manière à envoyer une demande d'établissement de groupe à un dispositif côté réseau, dans lequel la demande d'établissement de groupe est utilisée en vue de permettre au dispositif côté réseau d'établir un groupe de communication D2D ; la seconde unité d'envoi (81) est en outre agencée de manière à, dès lors que la communication D2D avec un second dispositif dans le groupe de communication D2D a pris fin, envoyer un message de fin de communication au dispositif côté réseau et au second dispositif, lequel efface ensuite une clé partagée du dispositif côté réseau ;
la première unité de réception (82) est agencée de manière à recevoir la clé partagée en provenance du dispositif côté réseau ;
la première unité de communication D2D (83) est agencée de manière à mettre en oeuvre la communication D2D sur la base de la clé partagée ; et
la première unité de suppression (84) est agencée de manière à supprimer la clé partagée, dans lequel le dispositif et le second dispositif sont des terminaux mobiles.

13. Dispositif selon la revendication 12, dans lequel la seconde unité d'envoi (81) comprend :
une sous-unité de génération agencée de manière à générer la demande d'établissement de groupe transportant des premières informations d'identité du premier dispositif et des secondes informations d'identité du second dispositif ; et
une sous-unité d'envoi agencée de manière à envoyer la demande d'établissement de groupe au dispositif côté réseau.

14. Dispositif selon la revendication 12, dans lequel la première unité de communication D2D (83) est agencée de manière à générer une clé de session sur la base de la clé partagée, et à mettre en oeuvre la communication D2D avec le second dispositif en faisant appel à la clé de session.

15. Programme informatique comprenant un moyen de code de programme informatique apte à mettre en oeuvre toutes les étapes du procédé selon l'une quelconque des revendications 1 à 4 ou selon l'une quelconque des revendications 5 à 7, lorsque ledit programme est exécuté sur un ordinateur.
